# EUROPEAN PATENT APPLICATION

(11) **EP 2 161 327 A1**
(43) Date of publication of application: **10.03.2010**
(21) Application number: 08015630.0
(22) Date of filing: 05.09.2008
(51) Int. Cl.: C10M 173/00, C10M 173/02, C10N 40/20

(54) **Emulsifiers for metal working fluids**

(71) Applicant: Cognis IP Management GmbH, 40589 Düsseldorf (DE)
(72) Inventor: Hof, Matthias, 47249 Duisburg (DE); Luedtke, Tanja, 41569 Rommerskirchen (DE)

(57) **Abstract**

The application pertains to the use of an alkoxylated fatty alcohol characterized by the general formula (I)
RO-(CH₂CH₂O)ₘ(CH₂CHR'-O)ₙ-H (I)
wherein R stands for a saturated and/or unsaturated alkyl moiety, containing 12 to 22 C-Atoms, R' is a methyl-, ethyl- or propyl-group, m represents a number of 1 to 12, and preferably 4 to 10, n represents a number of 1 to 10, and preferably 2 to 8, as emulsifier in metal working fluids, containing at least water and one oily component, non-miscible with water, and optionally further ingredients common for metal working fluids.

## Description

The present invention pertains to emulsifiers, useful in metal working fluids, as well as to metal working fluids, containing those emulsifiers.

Metalworking fluids, either based on petrochemical or natural oils, are well known in the art and utilized throughout the industry for a variety of processes including rolling, stamping, drawing, pickling, cutting and extruding. Aqueous formulations of various oils are widely used as the rolling oil in the cold rolling of steel to provide lubrication and to cool the rolls. In addition to providing effective lubrication and effective cooling of the workpiece/working elements, there are other criteria which must be met by metalworking fluids. Rolling oils, for example, must be capable of providing a continuous coating on the surface of the metal. Furthermore, this coating or film must have a minimum thickness and must be substantive enough to the metal so that it will be maintained at the high pressures which occur in the roll bite. Above and beyond these lubrication considerations it is particularly advantageous if the rolling oil provides some measure of corrosion protection to the rolled strip and bums off cleanly during the annealing operation. Residual rolling oil must volatilize cleanly and should not leave any carbonaceous deposits or surface discoloration. In view of variations in the metals being worked and the different operating conditions and application methods employed, numerous metalworking fluids have been developed in an attempt to obtain the optimum balance of properties. Most of these variations have involved the use of different fats and oils or replacement of a portion of the fat or oil with a petroleum product, e.g. mineral oil, or a synthetic lubricant, e.g. a synthetic hydrocarbon or ester.

Emulsifier systems have also been widely varied and additives have been employed to enhance the characteristics of these oils. Unfortunately, emulsions are quite unstable fluids. For example, they often show tendency to coalescence resulting in an increased mean particle size, changed particle size distribution and finally in oil and/or water separation. This instability is even more pronounced when operating under varying and severe process conditions. In this respect variables like make-up water quality/composition, temperature, pH, tramp oil and metal fines in the emulsion are considered important and crucial. In view of the above it is brought forward that the values of these variables can vary over wide ranges, well-known to those skilled in the art. For example, water hardness values of between 0 °dH (demineralized water) and 40 °dH for make-up water are observed. Also known is that after preparation of the emulsion the ionic strength and/or water hardness may change/increase significantly during the operation due to evaporation of water or incoming metal fines and ions, resulting in a reduction or loss of relevant properties like emulsion stability, film forming properties and dispersing capacity. Such instabilities of emulsions are highly unwanted. Users of metalworking emulsions strongly prefer stable emulsions having properties/performance not changing in time. Therefore, in the research and development area, producers of these emulsions will strive for maximization of the emulsion stability, especially under practical, varying operating conditions.

However, it has been found that the stability problems of metal working fluids being oil-in-water emulsions, or even multiple emulsions, can be solved by using one or more alkoxylated fatty alcohols as emulsifiers. Surprisingly, this type of emulsions do not only show a high emulsion stability under varying and severe processing conditions, but also provides a good foam behavior, and show good lubricating properties. Also the mentioned type of emulsifier show high responsiveness to concentration changes. By varying the content of the emulsifier the formulator can influence directly the size of the oil droplets in the emulsion as desired.

A first embodiment of the present invention pertains to the use of an alkoxylated fatty alcohol characterized by the general formula (I)

RO-(CH₂CH₂-O)ₘ(CH₂-CHR'-O)ₙ-H (I)

wherein R stands for a saturated and/or unsaturated alkyl moiety, containing 12 to 22 C-Atoms, R' is a methyl-, ethyl-, or propyl-group, m represents an number of 1 to 12, and preferably 4 to 10, n represents a number of 1 to 10, and preferably 2 to 8, as emulsifier in metal working fluids, containing at least water and one oily component, non-miscible with water, and optionally further ingredients.

The compounds according to formula (I) are known. It is preferred to have an unsaturated alkyl moiety in the fatty alcohol part, whereby mono-, di-, tri- or oligo unsaturated alkyl groups are all feasible. The alky moiety "R" might be branched or linear also. Preferred fatty alcohols, used to prepare the compounds according to formula (I) are selected from mono unsaturated fatty alcohols having 12 to 22, preferably 14 to 20 C-atoms. Linear alcohols are preferred over the branched ones.
Preferred unsaturated fatty alcohols in this context are 10-Undecen-1-ol, (Z)-9-Octadecen-1-ol (common name: oleyl alcohol), (E)-9-Octadecen-1-ol (common name: elaidyl alcohol), (Z,Z)-9,12-Octadecadien-1-ol (common name: linoleyl alcohol), (Z,Z,Z)-9,12,15-Octadecatrien-1-ol (common name: linolenyl alcohol), (Z)-13-Docosen-1-ol (common name: erucyl alcohol), and (E)-13-Docosen-1-ol (common name: brassidyl alcohol). Most preferred is oleyl alcohol.
Preferred saturated fatty alcohols in this context are hexanol-1, heptanol-1, octanol-1, nonanol-1, decanol-1, undecanol-1, dodecanol-1, tridecanol-1, tetradecanol-1, pentadecanol-1, hexapentanol-1, heptadecanol-1, octadecanol-1, nonadecanol-1, eicosanol-1, heneicosanol-1 and behenylalcohol-1. Besides this saturated, branched alcohols, like Guerbet-type alcohols are also feasible. Most preferred is cetyl-alcohol (= hexadecane-1-ol).

The components according to formula (I) are mixed alkoxylates, i.e. containing at least ethylene oxide moieties together with propylene oxide, butylene oxide or pentylene oxide, whereby the most preferred alkoxides are ethylene oxide and propylene oxide. The indices m and n are numbers and may be integers or fraction numbers, as the amount of alkoxides is, due to the kind of preparation statistically distributed. However, the teaching of the present invention encompasses alkoxides with a narrow range of alkoxides too.

The alkoxylated components according to formula (I) are prepared by standard methods known by the skilled person. The fatty alcohol is reacted with the alkoxides in the presences of alkaline catalysts at temperatures about 120 to 220 °C and a pressure of about 100 to 500 kPa, to form the alkoxylated end-product.
It is especially preferred to use such components according to formula (I) wherein the amount of ethylene oxide is equal or higher than the amount of the other alkoxide, i.e. then for the indices the relation m ≥ n is true. Preferred values for m are in the range from 4 to 10, and particular 4 to 8, preferred values for n are in the range from 2 to 8, and in particular from 4 to 6.

In the compounds according to formula (I) the sequence of ethylene oxide and the other alkoxide is not critical, and can be randomized (mixed sequence of different alkoxides) or block wise.
However, it is a preferred embodiment that the compound according to formula (I) contains two blocks, preferably the first one adjacent to the alkyl moiety contains the alkoxide, preferably propylene oxide, and the last block contains the ethylene oxide. Such compounds can described with the general formula RO-(CH₂CR'-O)ₘ(CH₂-CH₂-O)ₙ-H, or more simply as RO-(PO)ₘ-(EO)ₙH.
However, the above described general formula (I) is not to be understood as being limited to a specific sequence of the alkoxides moieties.

Generally, those compounds according to formula (I) are preferred in which R' stands for a methyl group, i.e. those compounds contain both ethylene oxide and propylene oxide together.

A further preferred embodiment of the present invention pertains to the use of a blend of components according to formula (I), in which R represents in the one compound a saturated moiety, and in the other compound an unsaturated moiety. The blends of saturated and unsaturated compounds according to formula (I) may vary in a broad range of weight ratio, for example the saturated compound is present in amounts from 1 to 99 % by weight, and the unsaturated compound is present in amounts from 99 to 1 % by weight. But, in cases when those combinations of saturated and unsaturated compounds are used, the amount of compounds of formula (I) is preferably greater than the amount of compounds according to formula (II). For example the amount of the unsaturated compound is in the range from 51 to 99 % by weight, and the amount of the saturated compound is from 1 to 49 % by weight.

A most preferred blend according to the invention contains oleyl- and cetyl-based compounds according to formula (I) together.

The use of alkoxylated fatty alcohols as emulsifiers for metal working fluids is not new. GB 1 462 357 discloses for the purpose of emulsifying a combination of fatty alcohol alkoxylates together with diesters of dicarboxylic acids. However, GB 1 462 357 disclosed in the examples only ethoxylated fatty alcohols, having saturated alkyl moieties. In contrast the present invention selects alkoxylated fatty alcohols having at least two different kinds of alkoxylates in the molecule. It is further preferred to avoid the use of such diesters of dicarboxylic esters in using the claimed process of the present invention.

Concerning the oil component of the emulsions according to the invention it is stated that such a component can be selected from the group consisting of mineral oils, synthetic lubricants, natural triglycerides and blends of all mentioned base fluids. Mineral oils are obtained by oil drilling and then fractionated and purified. Other known oil components useful in metal working fluids according to the present invention are esters, poly- alpha - olefins, polyglycols etc., all having a hydrophobic character and for that reason suitable for the preparation of the metal working fluids according to the invention. More in particular esters may be selected from the group consisting of (a) natural esters like vegetable and animal fats and oils being triglycerides of glycerol and fatty acids, and (b) synthetic esters of polyalcohols (polyols) and fatty acids of natural and synthetic origin. Examples of synthetic esters are fatty acids and polyols like pentaerythritol, trimethylolpropane, neopentylglycol etc.

As the metal working fluids according to the invention are preferably oil-in-water emulsions, in their final use the concentrate content is generally at most 20 weight-%, preferably less than 15 weight-% and most preferably less than 10 weight-%. However, for concentrated emulsions the oil content may even be 60 weight-%, for instance 50 weight-%.

Generally, those compounds according to formula (I) are preferred in which R' stands for a methyl group, i.e. those compounds contain both ethylene oxide and propylene oxide together.

The emulsifier according to the invention is present in the final metal working fluids in amounts of preferably 0.1 to 25 weight-%, more preferably in amounts from 1 to 15 weight-%, and most preferred in amounts from 1.5 to 10 weight-%.

The metal working fluids according to the invention are preferably oil-in water (o/w)-emulsions and more particularly (o/w)-macro-emulsions having a mean particle size above 0.1 µm. Preferred ranges are from 0.1 to 100 µm, and most preferred from 0.1 to 45 µm.

Further the metal working fluids may comprise all kinds of common additives like a sulfur additive, for instance a sulfurized oil or fat, an anti-wear agent and/or an extreme pressure additive as well as a corrosion inhibitor, defoamers, biocides and yellow metal deactivators, and/or solubilizers. Thus, a preferred embodiment of the invention pertains to use of an alkoxylated fatty alcohol characterized by the general formula (I) as emulsifier in metal working fluids, containing at least water and one oily component, non-miscible with water, and optionally further ingredients, selected from the group of sulfur additive, an anti-wear agent and/or an extreme pressure additives, corrosion inhibitors, defoamers, biocides, yellow metal deactivators and/or solubilizers.

The corrosion inhibitor is highly preferred additive in the metal working fluids according to the invention. Corrosion inhibitors are typically selected from a system containing a blend of fatty acids, fatty acid amines and alkylamines, as well as alkanolamides.

A typical yellow metal deactivator can be selected from the families of the azoles. Illustrative azole-type corrosion inhibitors are benzotriazole, tolutriazole, the sodium salt of mercapto-benzotriazole, naphthotriazole, methylene bis-benzotriazole, dodecyltriazole and butylbenzotriazole, preferably tolutriazole.

Besides the emulsifiers according to the invention, further emulsifiers of different structure are preferred components in the metal working fluids. Typically one emulsifier is hydrophobic in nature, where the other emulsifier is more hydrophilic. Co-emulsifiers are for example selected from ethoxylated fatty alcohols, alkoxylated fatty acids or phenol-type emulsifiers. Up to five different emulsifiers can be present in a metal working fluid.

The emulsifiers according to the present invention will be preferably combined or blended together with other additives, like preferably corrosion inhibitors and co-emulsifiers, oil and water to form a concentrate, which itself is then used to form a ready-made metal working fluid.

Thus, a further embodiment of the present invention pertains to an emulsion concentrate, containing at least one emulsifier according to formula (I), one co-emulsifier, a corrosion inhibitor, an oily component and optionally other ingredients, **characterized in that** the amount of emulsifier according to formula (I) is at least 5 % by weight, and at maximum 30 % by weight, preferably 25 % by weight.
Emulsion concentrates are common forms to commercialize water-miscable metal working fluids. These concentrates contain typically an emulsifier systems, comprising at least two different emulsifiers, a corrosion inhibitor system, and a base oil (mineral oils, ester oils, polyglycols and the like), and optionally additional ingredients, like defoamers, biocides, solubilizers and extreme pressure and/or anti wear additives (so called EP/AW additives). The amount of emulsifiers in such concentrates ranges from 5 to 30 % by weight, the base oil is present preferably in amounts from 50 to 75 % by weight, corrosion inhibitors will be present in amounts from 5 to 15 % by weight, biocides are used in amounts from 0.01 to 1 % by weight, solubilizers are preferably present in amounts from 1 to 5 % by weight, and the EP/AW-additives are used in amounts from 2 to 10 % by weight, with the proviso that the sum of all ingredients is 100 % by weight. Water can be present also in smaller amounts, like 5 to 25 % by weight, but it is only an optional ingredient.

The emulsions according to the invention can be obtained in two different ways: Directly, the emulsions (in their final use) are prepared by emulsification of an emulsifiable oil containing the alkoxylated fatty alcohols according to the invention in water. Indirectly, the emulsions are prepared in 2 steps by firstly making a concentrated emulsion (or using a concentrate, as described before), and secondly by diluting simply this concentrated emulsion with water. The concentrated emulsion is an oil-in-water emulsion of about 60 weight-% oil in water stabilized with the alkoxylated fatty alcohol emulsifiers. The final emulsion can be prepared by simply diluting the concentrated emulsion with water.

A further aspect of the invention is directed to the use of the metal working fluids in metal working processes. Typical metal working processes involve elastic deformation, plastic deformation or cold working of metals, with or without metal removal. In some of these operations the metal piece is deformed only; like in rolling and drawing of steel and aluminum, while in others metal is rather removed than deformed, like in cutting, grinding, broaching, machining and drilling of metals. The metallic material from which the metal working apparatus and articles to be fabricated are made, include steel, cast iron, and ferrous alloys, as well as aluminum alloys and other non-ferrous alloys, including such components as titanium, magnesium, copper, tin and brass.

A last embodiment of the current application pertains to a metal working fluid, containing at least a water-phase, an oil-phase, not miscible with water, an emulsifier, and additional compounds, selected from the group of emulsifiers, co-emulsifiers, corrosion inhibitors, yellow metal deactivators, defoamers, biocides, EP- and/or AW-additives, solubilizers, characterized that the fluid contains in amounts of 0.1 to 20.0 % by weight as emulsifier at least one compound according to formula (I) as given in claim 1.

### Examples

Two new emulsifiers were synthesized using standard alkoxylation methods and run through different application tests in comparison to a commercial nonionic emulsifier with 5 parts ethylene oxide.

### 1. Synthesis of Emulsifier A

333 g oleyl/cetyl-alcohol were mixed with 1.4 g KOH solution and dried under vacuum. Then first 221 g propylene oxide (PO) was added at 170-180 °C and a pressure of at maximum 5 bars. After the propoxylation reaction had taken place 146 g ethylene oxide (EO) were added under the same conditions. After successful take-up of the oxides the reaction was continued for another 60 minutes. Then the reaction mixture was cooled down, neutralized and filtered through Tonsil^{®} and Celatom^{®} to yield a pale yellow, liquid product. The following physical data were measured to characterize the material:

| | |
|---|---|
| Density at 15°C | 0.9520 g/cm³ |
| Viscosity at 40°C | 24.8 mm²/s |
| Viscosity at 100°C | 6.0 mm²/s |
| VI | 172 |
| Cloud point | 4 °C |
| Pourpoint | 3 °C |
| Turbidity point in butyl diglycol | 62 °C |
| HLB value | 10.5 |

All measurements where carried out according to DIN methods.

### 2. Synthesis of Emulsifier B

244 g oleyl/cetyl-alcohol were mixed with 1.4 g KOH solution and dried under vacuum. Then first 214 g propylene oxide was added at 170-180°C and a pressure of at maximum 5 bars. After the propoxylation 243 g ethylene oxide were added under the same conditions. After successful take-up of the oxides the reaction was continued for another 60 minutes. Then the reaction mixture was cooled down, neutralized and filtered through Tonsil^{®} and Celatom^{®} to yield a pale yellow, liquid product. The same data as with Emulsifier A were measured to characterize the material:

| | |
|---|---|
| Density at 15°C | 0.978 g/cm³ |
| Viscosity at 40°C | 40.6 mm²/s |
| Viscosity at 100°C | 8.4 mm²/s |
| VI | 188 |
| Cloud point | 8 °C |
| Pourpoint | 0 °C |
| Turbidity point in butyl diglycol | 68 °C |
| HLB value | 14.0 |

### 3. Comparison of Foaming Behavior

Emulsifier A, emulsifier B and a commercial nonionic emulsifier with 5 EO were compared in terms of foaming. To evaluate the 3 components a test used as described below using the Sita Foam Tester^{®} R-2000:
- Preparation of 1% solution in water
- Put 300 ml solution in beaker
- Run test under stirring using the following parameter

| | | |
|---|---|---|
| Sample volume: | 300 ml | |
| Temperature: | 20 °C | tolerance: +/- 0.5°C |
| Stirrer velocity: | 1100 min⁻¹ | |
| Time of stirring: | 10 sec. | Cycles: 3 |
| Interval of measurement: | 10 sec. | |
| Time of foam decomposition: | 20 min / 0 ml foam height | |
| Cleaning: | shortened | |

- The foam height is recorded for each interval and the decay over 20 minutes.
- Average values are displayed in a diagram : foam height against time

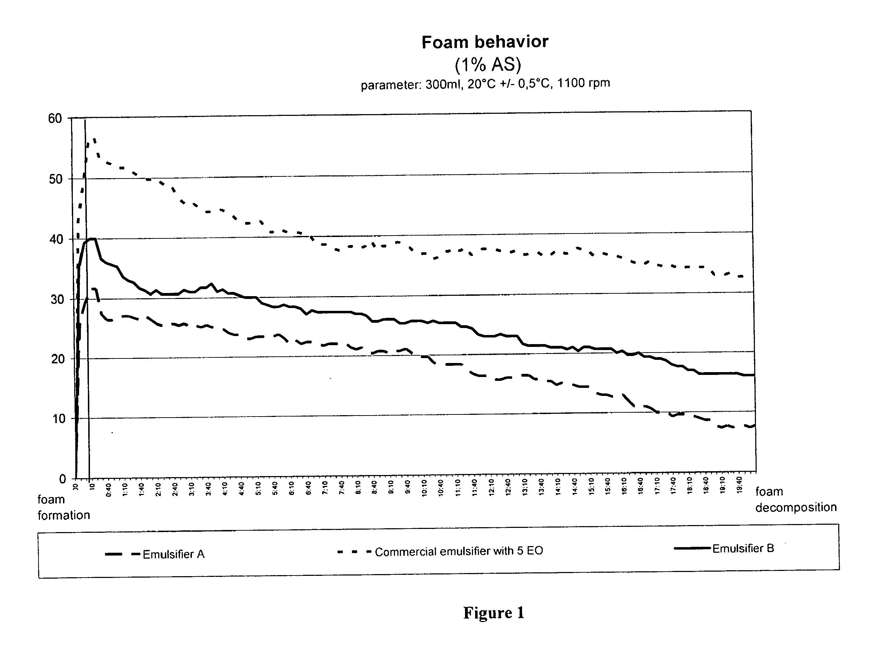

The build-up and decrease of the foam is showed in Figure 1 for Emulsifier A and B in comparison with the commercial 5 EO product. It can be clearly seen, that both new emulsifiers generate much less foam than the commercial 5 EO emulsifier has a higher foaming tendency despite the higher HLB value of the new emulsifier A and B.

### 4. Lubrication behaviour

All three already tested emulsifiers were used in a basic frame formulation containing base fluid, corrosion protection package and emulsifier package. The following formulations were used to evaluate Emulsifier A and B:

| **Content (w/w)** | **Formulation A** | **Formulation B** | **Formulation C** |
|---|---|---|---|
| 50.00% | Ester | Ester | Ester |
| 5.80% | Monoethanolamine | Monoethanolamine | Monoethanolamine |
| 2.20% | Triethanolamine | Triethanolamine | Triethanolamine |
| 14.00% | Tall oil fatty acid | Tall oil fatty acid | Tall oil fatty acid |
| 3.80% | Fatty Acid C8 | Fatty Acid C8 | Fatty Acid C8 |
| 6.00% | Alkanolamide | Alkanolamide | Alkanolamide |
| 10.60% | Hydrophobic emulsifier | Hydrophobic emulsifier | Hydrophobic emulsifier |
| 2.70% | Butyldiglycol | Butyldiglycol | Butyldiglycol |
| 4.90% | Emulsifier A | Emulsifier B | Commercial 5 EO product |

The three frame formulations were tested for lubricating performance using the Reichert Rig. The recorded wear scars are listed below.

| | **Formulation A** | **Formulation B** | **Formulation C** |
|---|---|---|---|
| **Wear Scar** | 14.7 | 15.0 | 15.5 |

Both new emulsifiers show matching performance to other commercial emulsifier.

### 5. Comparison of Foaming Behavior of Formulations

All three formulations prepared for the lubrication test were run through the same foam test as the pure emulsifiers.

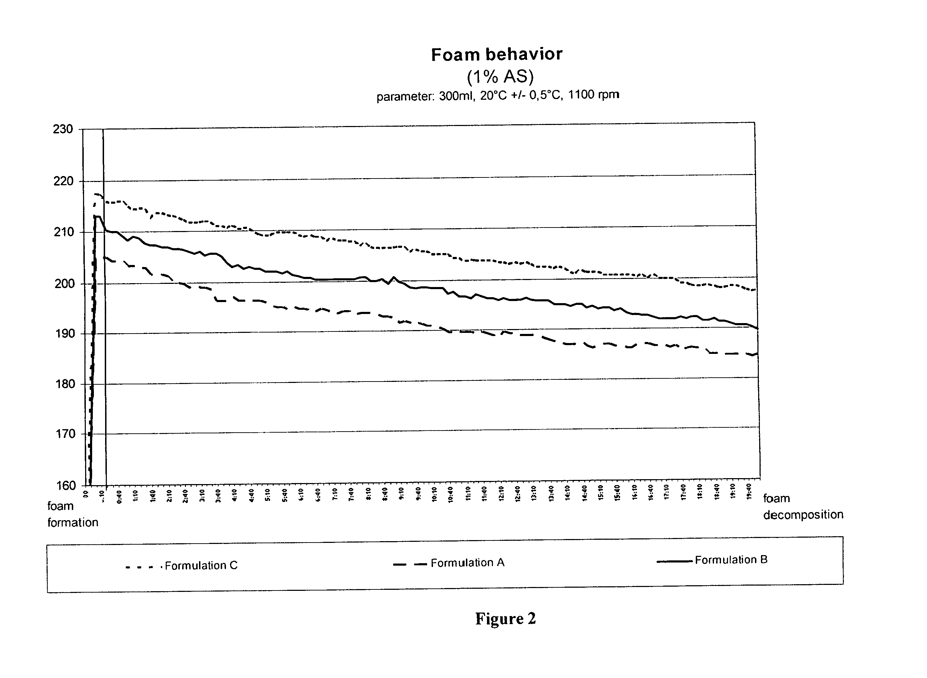

The build-up and decrease of the foam is showed in Figure 2 for Formulation A and B in comparison with Formulation C. The results and conclusions of the pure emulsifiers could be clearly mirrored in the used frame formulation.

### 6. Emulsion behaviour in different base fluids

To show the versatility towards different base fluids all three emulsifier were blended in specific percentage in 4 fluids: two esters of different chemical structure (Trimethylolpropane-trioleate = TMP-trioleate; 2-ethylhexyloleate = 2-EH-oleate) and 2 petrochemical fluids (Naphthenic oil; Paraffinic oil).
These concentrates were then diluted 5% in water for a particle size measurement. Average, median and maximum values of the oil droplet distribution were recorded. All three values should ideally be very equal. But due to the logarithmic scale of the x axis higher deviations can be accepted when bigger droplets are present. The average value equals the particle size, which represents the arithmetic middle particle size when recognizing the logarithmic scale. The median value represents the particle size, till which 50% of all oil droplets are measured. The maximum value represents the particle size, of which the high percentage is present in the emulsion.

The results are given in the below tables 1 and 2 for both new emulsifiers in the 4 base fluids.

**Table 1**

| **Base Oil** | **Emulsifier** | **Concentration Emulsifier** | **Appearance Concentrate** | **Appearance Emulsion** | **Average Value** **[µm]** | **Median Value** **[µm]** | **Maximum Value** **[µm]** |
|---|---|---|---|---|---|---|---|
| TMP-trioleate | A | 10% | Clear | OK | 13.69 | 6.21 | 4.87 |
| | | 20% | Clear | OK | 6.281 | 5.831 | 8.537 |
| | | 25% | Clear | OK | 15.29 | 10.16 | 23.82 |
| | | | | | | | |
| 2-EH-oleate | A | 10% | Little Haze | separate | 16.82 | 11.72 | 34.59 |
| | | 20% | Little Haze | OK | 12.7 | 7.806 | 7.084 |
| | | 25% | Little Haze | OK | 10.02 | 6.756 | 6.45 |
| | | | | | | | |
| Naphthenic Oil | A | 10% | Cloudy | OK | 12.28 | 10.91 | 18 |
| | | 20% | Cloudy | OK | 18.87 | 18.29 | 21.7 |
| | | 25% | Cloudy | OK | 14.14 | 7.69 | 4.05 |
| | | | | | | | |
| Paraffinic Oil | A | 10% | Little Haze | OK | 11.69 | 7.973 | 13.61 |
| | | 20% | Little Haze | OK | 3.035 | 2.706 | 3.06 |
| | | 25% | Little Haze | OK | 0.46 | 0.486 | 0.688 |

**Table 2**

| **Base Oil** | **Emulsifier** | **Concentration Emulsifier** | **Appearance Concentrate** | **Appearance Emulsion** | **Average Value** **[µm]** | **Median Value** **[µm]** | **Maximum Value** **[µm]** |
|---|---|---|---|---|---|---|---|
| TMP-trioleate | B | 20% | Little Haze | Creaming | 24.99 | 13.95 | 34.59 |
| | | | | | | | |
| 2-EH-oleate | B | 10% | Little Haze | separate | 20.11 | 14.73 | 41.68 |
| | | 20% | Little Haze | OK | 13.76 | 9.806 | 34.59 |
| | | 25% | Little Haze | OK | 4.235 | 1.384 | 0.117 |
| | | | | | | | |
| Naphthenic Oil | B | 10% | Little Haze | OK | 12.33 | 7.733 | 12.4 |
| | | 20% | Clear | OK | 8.968 | 6.991 | 9.026 |
| | | 25% | Clear | OK | 0.131 | 0.088 | 0.088 |
| | | | | | | | |
| Paraffinic Oil | B | 10% | Haze | Creaming | 17.02 | 11.59 | 26.15 |
| | | 20% | Little Haze | OK | 6.452 | 2.329 | 2.313 |
| | | 25% | Clear | OK | 0.123 | 0.122 | 0.117 |

It can be seen, that Emulsifier A is highly suitable for all kinds of base fluids, while Emulsifier B is more effective in terms of mono-esters in higher concentrations and in general for petrochemical base oils.

As comparative example the same measurements as for Emulsifiers A and B where carried out for Example C. As can be seen in Table 3 the droplet size is only weak influenced by the concentration of emulsifier C, and the properties of the emulsions are less advantageous than the emulsions prepared in accordance with the invention. In particular, the concentration of the emulsifier C is not triggering the droplet size in the same manner as the inventive emulsifiers A and B.

**Table 3**

| **Base Oil** | **Emulsifier** | **Concentration Emulsifier** | **Appearance Concentrate** | **Appearance Emulsion** | **Average Value** **[µm]** | **Median Value** **[µm]** | **Maximum Value** **[µm]** |
|---|---|---|---|---|---|---|---|
| TMP-trioleate | C | 5% | Clear | OK | 4,91 | 3,005 | 2,539 |
| | | 10% | Little Haze | Creaming | 3,379 | 2,263 | 2,107 |
| | | 30% | Cloudy | Separate | 4,806 | 2,842 | 2,539 |

## Claims

1. Use of an alkoxylated fatty alcohol **characterized by** the general formula (I)
RO-(CH₂CH₂-O)ₘ(CH₂-CHR'-O)ₙ-H (I)
wherein R stands for a saturated and/or unsaturated alkyl moiety, containing 12 to 22 C-Atoms, R' is a methyl-, ethyl- or propyl-group, m represents a number of 1 to 12, and preferably 4 to 10, n represents a number of I to 10, and preferably 2 to 8, as emulsifier in metal working fluids, containing at least water and one oily component, non-miscible with water, and optionally further ingredients.

2. Use according to claim 1, **characterized in that** a component according to formula (I) is used, in which R represents an oleyl-moiety, and R' stands for a methyl group.

3. Use according to claim 1 and/or 2, **characterized in that** a blend of at least two different compounds according to formula (I) is used, wherein one compound contains as group R an unsaturated moiety, and the other compound contains as R a saturated moiety.

4. Use according to at least one of claims 1 to 3, **characterized in that** a blend of at least two different compounds of formula (I) is used, wherein the one component contains as group R a oleyl-moiety, and the other compound contains as group R a cetyl-moiety.

5. Use according to at least one of the claims 1 to 4 **characterized in that** the emulsifier according to formula (I) is present in the metal working fluid in amounts from 0.1 to 25 % by weight, preferably from 1 to 20 % by weight, and most preferably from 1,5 to 10 % by weight.

6. Use according to at least one of the claims 1 to 5 **characterized in that** the metal working fluid is an emulsion, preferably of the type oil-in-water.

7. Uses according to at least one of the claims 1 to 6, **characterized in that** the co-use of diesters of dicarboxylic acids is excluded.

8. Emulsion concentrate, containing at least one emulsifier according to formula (I), at least one additional emulsifier, a corrosion inhibitor system, an oily component and optionally other ingredients, **characterized in that** the amount of emulsifier according to formula (I) is at least 2 % by weight, and at maximum 30 % by weight, preferably 3 to 25 % by weight.

9. Metal working fluid, containing at least a water-phase, an oil-phase, not miscible with water, at least one emulsifier, and additional compounds, selected from the group of corrosion inhibitors, yellow metal deactivators, defoamers, and/or biocides, **characterized** that the fluid contains in amounts of 0.1 to 20.0 % by weight as emulsifier at least one compound according to formula (I) as given in claim 1.
